Europäisches Patentamt

(19) **European Patent Office**

Office européen des brevets

(11) Publication number: **0 053 509**
**B1**

(12) **EUROPEAN PATENT SPECIFICATION**

(45) Date of publication of patent specification: **30.04.86**

(51) Int. Cl.⁴: **F 16 B 2/14, H 01 R 4/50**

(21) Application number: **81305651.2**

(22) Date of filing: **30.11.81**

(54) **A method of making an electrical connection.**

(30) Priority: **01.12.80 GB 8038521**

(43) Date of publication of application:
**09.06.82 Bulletin 82/23**

(45) Publication of the grant of the patent:
**30.04.86 Bulletin 86/18**

(84) Designated Contracting States:
**AT BE CH DE FR GB IT LI LU NL SE**

(56) References cited:
EP-A-0 052 426
BE-A- 647 553
DE-B-2 203 765
DE-C- 157 389
DE-C- 374 103
DE-U-1 724 630
DE-U-1 772 780
GB-A- 975 439
GB-A-1 030 058
GB-A-1 443 332
US-A-1 490 416
US-A-1 505 620
US-A-1 737 091
US-A-1 796 793
US-A-2 287 454
US-A-3 015 507

"Soviet Inventions Illustrated", Week C 10, 16
April 1980, Section Q 61

(73) Proprietor: **BICC Public Limited Company**
**21, Bloomsbury Street**
**London, WC1B 3QN (GB)**

(73) Proprietor: **BURNDY CORPORATION**
**Norwalk Connecticut 06856 (US)**

(72) Inventor: **Airey, Benjamin**
**197 Newton Road**
**Lowton Warrington Merseyside (GB)**

(74) Representative: **Poole, Michael John et al**
**BICC plc Patents and Licensing Department 38**
**Ariel Way Wood Lane**
**London W12 7DX (GB)**

# Description

This invention relates to a method of making an electrical connection by driving a wedge into a receptacle.

In some mechanical joints, the frictional forces acting on a wedge of sufficiently small angle may be adequate to secure it against slipping from its receptacle, but in electrical joints a mechanical interlock against slipping is usually required; since one of the attractions of wedged connections is simplicity and speed of application, the formation of the interlock ought not to involve any separate operation from the driving of the wedge.

In some electrical wedge connectors, this requirement has been met by driving the wedge into the receptacle until a portion at the front end of the wedge projects through a front of the receptacle and engages an abutment providing an inclined surface so as to distort that portion of the wedge until it engages the front of the receptacle so as to resist withdrawal of the wedge. GB—A—1030058 discloses the known form of connector in which the inclined surface of the abutment is one of the faces defining a cutting edge which cuts into a plain front on the wedge to form the portion to be bent.

This technique is effective, but demands precise control of the dimensions and positioning of the wedge, the magnitude of the impact by which it is driven home (for instance, when a cartridge-operated driving tool is used, only a very limited number of sizes of wedge can be driven by one size of cartridge), and the angle and sharpness of the cutting edge.

EP—A—0052426 (not published at the priority date of this application but forming part of the prior art under Article 54, 3, EPC) discloses a partial solution to this problem whereby the portion of the wedge to be deformed is a preformed, relatively thin part and is deformed by bending, without requiring cutting action from the abutment. This technique still requires close control of the impact magnitude.

The method of making an electrical connection in accordance with the invention is characterised not only in that the portion of the wedge to be deformed is a preformed, relatively thin part and is deformed by bending but also in that the front end of the abutment thereupon engages an appropriate surface of the wedge to absorb excess energy.

Preferably the preformed, relatively thin part is a portion of a circumferentially-continuous sidewall that defines and surrounds a well in the front end of an otherwise simple wedge shape (as proposed in EP—A—0052426) as this minimises the risk of premature bending either before or during driving and avoids adding any edges to the longitudinal faces of the wedge. In this case the surface of the wedge engaged by the front of the abutment is preferably the bottom of the well.

It is desirable that the wall thickness is uniform in a circumferential direction, at least in the region that is to be bent. When electric conductors are to be secured between the wedge and the receptacle, these may vary in size and consequently the relative positions of wedge and receptacle in the finished connection may vary; to accommodate this, the abutment on the tool is preferably significantly narrower than the well in the front of the wedge.

The invention has three significant advantages over the use of a cutting device:

(i) less energy is required to bend the wedge portion than to cut and bend an equivalent portion of a solid wedge

(ii) the risk of rebound and consequent distortion is reduced; and

(iii) the front end of the abutment (whether sharp of blunt) in engaging the appropriate surface on the wedge absorbs any excess energy at the end of the working stroke, so that the energy input (cartridge size) is less critical.

The invention will be further described by way of example with reference to the accompanying drawings in which:—

Figures 1 and 2 are mutually perpendicular cross-sections through a preferred form of wedge for use in the method of the invention (see the section lines in Figure 3);

Figure 3 is an end view of the wedge from the direction indicated by the arrows III—III in Figure 2;

Figure 4 is a side view in the direction of the arrows IV—IV in Figure 3;

Figure 5 shows this wedge in the course of being driven into a receptacle, together with the distinctive part of the tool used for driving it; and

Figure 6 shows parts of the wedge receptacle and tool when the wedge is fully driven home.

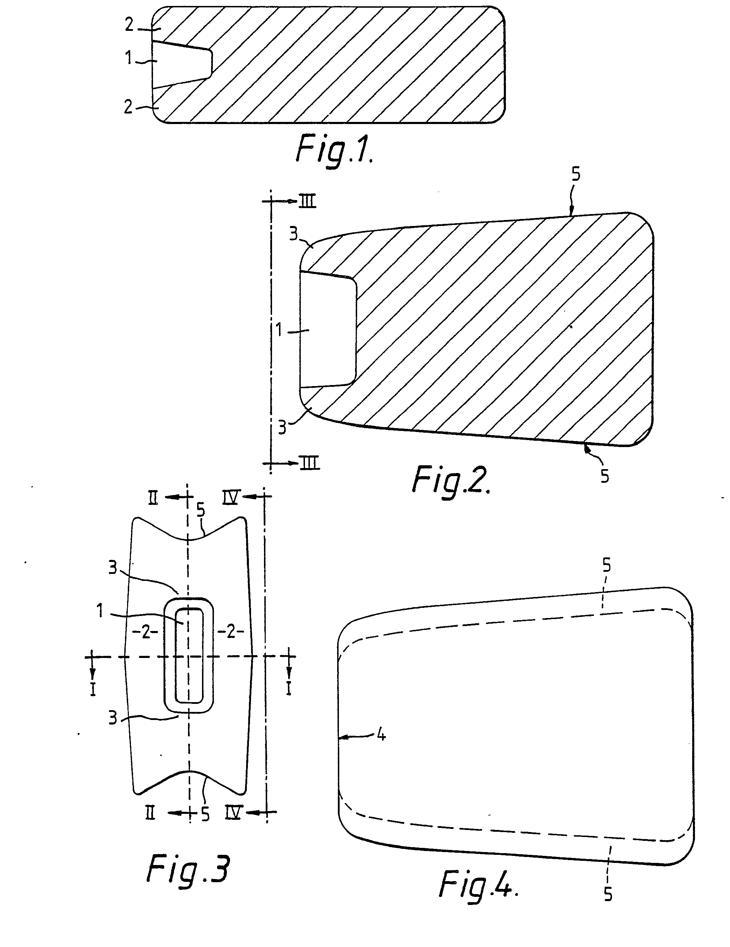

The wedge (Figures 1 to 4) is of conventional shape, but for the well 1 bounded by side walls 2, 3 in its forward end 4. The wedge faces 5 are concave to provide a seating for respective conductors to be electrically connected together by driving the wedge between them when appropriately positioned in a correspondingly tapered receptacle.

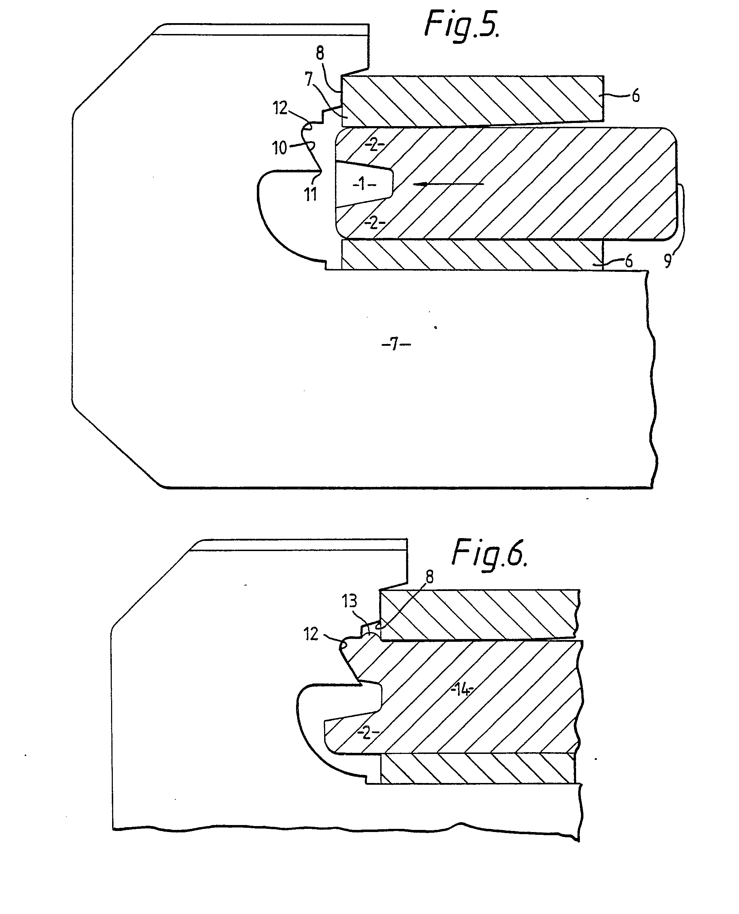

To make an electrical connection by the method of the invention, the conductors (not shown) are appropriately positioned in a receptacle 6 (Figure 5) which may be of conventional shape, and the wedge is loosely inserted between them. The assembly is then located in a tool 7, only part of which is shown, with the forward end of the receptacle engaged with an abutment surface 8 on the tool. The wedge is then driven forwards, by an explosive actuated ram acting on its rear end 9 or otherwise, the dimensions being such that the forward end of the wedge will eventually project beyond the front end of the receptacle.

The tool includes a camming surface 10 positioned to engage whichever of the side walls 2 is located uppermost in the orientation of Figure 5, so as to provide bending forces to the forward end of the side wall 2, without the edge 11 that limits the camming surface cutting the wedge, and an inclined surface 12 is positioned to engage an edge of the wedge to hold it against being displaced upwardly as a whole. This results in a distortion of that side wall by bending until a projection 13 is formed that engages the forward end 8 of the receptacle and so positively locks the wedge against withdrawl from the receptacle.

With the dimensions shown in these drawing, the edge 11 does not engage the wedge at any time. However, when the conductors used are of smaller cross-section, the wedge travels forward further relative to the receptacle, and excess energy is absorbed when the edge 11 engages the solid bottom 14 of the well 1.

## Claims

1. A method of making an electrical connection comprising driving a wedge into a receptacle (6) until a portion (2) at the front end of the wedge projects through the front of the receptacle and engages an abutment providing an inclined surface (10) so as to distort that portion of the wedge until it engages the front of the receptacle so as to resist withdrawal of the wedge, characterised both in that the said portion of the wedge is a preformed relatively thin part of the wedge and is deformed by bending, and also in that the front end (11) of the abutment thereupon engages an appropriate surface (14) of the wedge to absorb excess energy.

2. A method as claimed in claim 1 in which the portion (2) deformed by bending is a portion of a circumferentially continuous side wall that defines and surrounds a well (1) in the front end of the wedge, and the surface engaged by the front of the abutment is the bottom (14) of the well.

## Patentansprüche

1. Verfahren zum Herstellen einer elektrischen Verbindung, wobei ein Keil in eine Ausnehmung (6) getrieben wird, bis ein Abschnitt (2) am Vorderende des Keils die Stirn der Ausnehmung durchdringt und mit einem eine geneigte Fläche (10) ausbildenden Anschlag in Eingriff kommt, so daß dieser Abschnitt des Keils verformt wird, bis er mit der Stirn der Ausnehmung derart, in Eingriff steht, daß dem Herausziehen des Keils ein Widerstand entgegengesetzt wird, dadurch gekennzeichnet, daß dieser Abschnitt des Keils ein vorgeformter, relativ dünner Teil des Keils ist und beim Biegen deformiert wird, und daß das Vorderende (11) des Anschlages daraufhin mit einer geeigneten Fläche (14) des Keils in Eingriff, kommt, um überschüssige Energie zu absorbieren.

2. Verfahren nach Anspruch 1, dadurch gekennzeichnet, daß der durch Biegen deformierte Abschnitt (2) ein Abschnitt einer kontinuierlich umlaufenden Seitenwand ist, die eine Vertiefung (1) im Vorderende des Keils begrenzt und umgibt, und daß die mit dem Vorderende des Anschlages in Eingriff kommende Fläche der Boden (14) der Vertiefung ist.

## Revendications

1. Procédé pour établir une connexion électrique comprenant l'enfoncement d'un coin dans une prise (6) de courant jusqu'à ce qu'une partie (2) de l'extrémité avant du coin forme une saillie à travers l'avant de la prise de courant et entre en contact avec une butée qui présente une surface inclinée (10) de manière à déformer cette partie du coin jusqu'à ce qu'elle entre en contact avec l'avant de la prise de courant, offrant ainsi une résistance au retrait du coin, caractérisé à la fois en ce que cette partie du coin est une partie relativement mince, préformée et qui est déformée par flexion, et en ce que l'extrémité avant (11) de la butée entre ensuite en contact avec une surface appropriée (14) du coin afin d'absorber l'énergie en excès.

2. Procédé suivant la revendication 1, dans lequel la partie (2) déformée par flexion appartient à une paroi latérale circonférentiellement continue et qui forme et entoure un creux (1) formé dans l'extrémité avant du coin, et la surface qui entre en contact avec l'avant de la butée est le fond (14) du creux.

Fig.1.

Fig.2.

Fig.3.

Fig.4.

*Fig.5.*

*Fig.6.*